Europäisches Patentamt

European Patent Office

Office européen des brevets

(19)

(11) Veröffentlichungsnummer: **0 202 501 B1**

(12) **EUROPÄISCHE PATENTSCHRIFT**

(45) Veröffentlichungstag der Patentschrift: **31.07.91**

(51) Int. Cl.⁵: **C01B 13/11**

(21) Anmeldenummer: **86105713.1**

(22) Anmeldetag: **25.04.86**

(54) Ozonerzeuger.

(30) Priorität: **21.05.85 CH 2154/85**

(43) Veröffentlichungstag der Anmeldung:
**26.11.86 Patentblatt 86/48**

(45) Bekanntmachung des Hinweises auf die
Patenterteilung:
**31.07.91 Patentblatt 91/31**

(84) Benannte Vertragsstaaten:
**CH DE FR GB LI NL**

(56) Entgegenhaltungen:
**DE-A- 3 424 889**
**DE-B- 1 132 253**
**FR-A- 1 580 288**

**PATENT ABSTRACTS OF JAPAN, Band 2, Nr.
48, 31. März 1978, Seite 44 C 78; & JP-A-53
5095 (MITSUBISHI DENKI K.K.) 18-01-1978**

**PATENT ABSTRACTS OF JAPAN, Band 2, Nr.
48, 31. März 1978, Seite 45 C 78; & JP-A-53
5096 (MITSUBISHI DENKI K.K.) 18-01-1978**

**PATENT ABSTRACTS OF JAPAN, Band 3, Nr.
7, 24. Januar 1979, Seite 128 C34; & JP-A-53
131 296 (HITACHI SEISAKUSHO K.K.)
15-11-1978**

(73) Patentinhaber: **Ozonia AG**
**Schaffhauserstrasse 418**
**CH-8050 Zürich(CH)**

(72) Erfinder: **Hirth, Michael, Dr.**
**Weidweg 4**
**CH-5035 Unterentfelden(CH)**

(74) Vertreter: **Ottow, Jens M. et al**
**Asea Brown Boveri AG Abteilung REI-
Immaterialgüterrecht**
**CH-5401 Baden(CH)**

## Beschreibung

Die Erfindung bezieht sich auf einen Ozonerzeuger gemäss dem Gattungsbegriff des Patentanspruchs 1.

Mit diesem Oberbegriff nimmt die Erfindung Bezug auf einen Stand der Technik, wie er sich beispielsweise aus "PATENT ABSTRACTS OF JAPAN" Band 3, Nr.7, 24. Januar 1979, Seite 128 C34 bzw. der JP-A-53 131 296 ergibt.

Der Anmelder hat sich unter Bezugnahme auf die ältere Anmeldung P 34 24 889 in der Bundesrepublik Deutschland freiwillig eingeschränkt und gesonderte Patentansprüche für die Bundesrepublik Deutschland vorgelegt.

Für sehr viele Prozesse sind überaus grosse Ozonmengen in der Grössenordnung von hunderten Kilogramm bis Tonnen pro Stunde erforderlich, und darum können sie praktisch nur dann durchgeführt werden, wenn kompakte Hochleistungsozongeneratoren zur Verfügung stehen, welche derartig hohe Ozonmengen liefern können.

Zur Steigerung der Leistungsdichte von Ozonisatoren - seien es solche mit rohrförmigem oder plattenförmigem Dielektrikum - wurde in der Vergangenheit das Dielektrikum Glas durch Dielektrika auf Kunststoff- oder Keramikbasis ersetzt.

Bei einem Ozongenerator ist nämlich die pro Entladungsflächeneinheit gebildete Ozonmenge Y der elektrischen Leistung W pro Flächeneinheit proportional:

$$Y = K \cdot W$$

Die elektrische Leistung W ist wiederum proportional der relativen Dielektrizitätskonstante E, und umgekehrt proportional der Dicke d des Dielektrikums:

$$W = K' \cdot \frac{E}{d}$$

Wird als Dielektrikum Glas verwendet, so sind Werte für die Dielektrizitätskonstante bis E∿5 möglich. Die Wandstärke derartiger Glasdielektrika muss mindestens 2 mm betragen, da anderenfalls aufgrund hoher thermischer Beanspruchungen Beschädigungen zu befürchten sind.

Aus der DE-OS 26 58 913 ist ein Ozongenerator bekannt, der aus einer gekühlten Innenelektrode, einer Aussenelektrode und einer dazwischen konzentrisch angeordneten Hochspannungselektrode jeweils an ihrem Aussenmantel mit einem Glas-Email-Dielektrikum beschichtet sind. Ein Hochfrequenz-Röhrenozongenerator, bei dem auf die sich gegenüberliegenden Oberflächen von konzentrisch angeordneten Metallrohren je eine Dielektrikumschicht aus Silikatemail oder Glas aufgebracht ist, ist aus der DE-PS 25 34 033 bekannt. Aus der DE-OS 26 17 059 ist es bekannt, bei Ozongeneratoren als Dielektrikum eine dünne Kieselgel-Schicht zu verwenden, die auf selbsttragenden Metallelektroden aufgebracht ist.

Ein Ozongenerator, der aus einem selbsttragenden Keramikrohr als Dielektrikum besteht, welches an seiner Aussenmantelfläche mit einer Metallschicht einer Elektrode bedeckt ist und in welchem konzentrisch ein Metallrohr als Gegenelektrode angeordnet ist, ist aus der DE-OS 23 54 209 bekannt. Ein derartiges, selbsttragendes Keramikrohr kann jedoch nicht beliebig dünn dimensioniert werden und ist ausserdem sehr bruchempfindlich.

Ein Ozongenerator dessen Elektroden aus entkarbonisiertem Stahl bestehen, die mit einer dünnen Keramikschicht als Dielektrikum überzogen sind, ist aus der DE-OS 20 65 823 bekannt. Solche Keramikschichten müssen jedoch bei relativ hohen Temperaturen eingebrannt werden, was zu einem störenden Verzug der selbsttragenden Metallelektroden führen kann.

Ein Dielektrikum für Ozongeneratoren, das aus einem Keramikmaterial mit $Al_2O_3$, $SiO_2$ und mindestens einem Alkalioxid oder Erdalkalioxid besteht und eine Dielektrizitätskonstante zwischen 5 und 10 besitzt und 0,5 mm bis 1 mm dick ist, ist aus der DE-AS 26 18 243 bekannt.

Bei all den vorbeschriebenen Nicht-Glas-Dielektrika lässt sich grundsätzlich die Leistungsdichte und damit die Ozonausbeute steigern.

Nach den Erkenntnissen der Anmelderin übt die Oberfläche des Dielektrikums einen entscheidenden Einfluss auf den Wirkungsgrad des Ozonerzeugers aus. Dielektrika auf Keramik- oder Kunstharzbasis sind in dieser Hinsicht Glasdielektrika unterlegen.

In der nicht vorveröffentlichten DE-A-3 424 889 wird ein Ozonerzeuger mit einem Keramik-Dielektrikum vorgeschlagen, welches durch eine Schicht aus Passivierungsglas abgedeckt ist. Welche Massnahmen bei Dielektrika auf Kunststoff-Basis, insbesondere solchen Kunststoffen, die mit dielektrischem Pulver gefüllt sind, zu treffen sind, geht aus dem besagten Dokument nicht hervor.

Ausgehend vom Bekannten liegt der Erfindung die Aufgabe zugrunde, einen Ozonerzeuger zu schaffen, dessen Dielektrikum eine hohe Dielektrizitätskonstante, gleichzeitig aber auch eine hohe Durchschlagfestigkeit besitzt, und bei Schichtdicken in der Grössenordnung 100 $\mu$m eine Ozonausbeute erzielbar ist, die auch hinsichtlich Wirkungsgrad Glasdielektrika ebenbürtig ist.

Die Lösung dieser Aufgabe erfolgt durch die im Patentanspruch 1 angegebenen Merkmale.

Zur besseren Verbindung mit dem Grundmaterial empfiehlt sich bei letzteren eine Vorbehandlung mit einem Hochtemperatur-Kleber auf $Al_2O_3$-Basis.

In allen Fällen lässt sich eine Wirkungsgradverbesserung erzielen, die Werte von Glasdielektrika erreicht. Darüber hinaus verleihen die Keramikschichten dem Kunststoffdielektrikum zusätzlich eine wesentlich erhöhte Resistenz gegenüber dem Oberflächenangriff der Teilentladungen.

Die Erfindung wird nachstehend anhand zweier Ausführungsbeispiele näher erläutert.

In der Zeichnung zeigt

Fig. 1     einen Querschnitt durch einen Röhrenozonisator mit Titandioxid-Dielektrikum mit Glas-Passivierung

Fig. 2     einen Querschnitt durch einen Röhrenozonisator mit gefülltem Kunststoffdielektrikum.

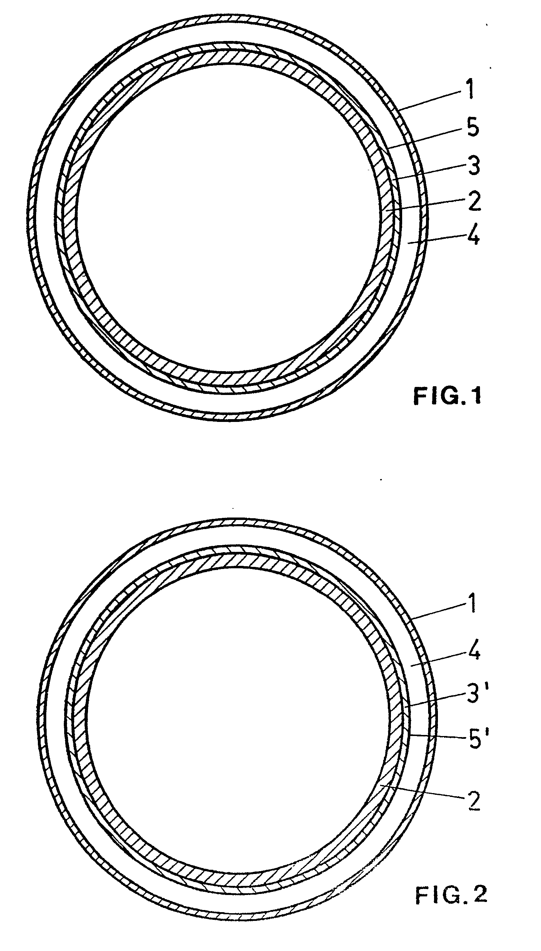

In Fig. 1 ist eine erste metallische Elektrode mit 1, eine zweite metallische Elektrode mit 2 bezeichnet. Die zweite Elektrode 2 weist auf der der ersten Elektrode 1 zugewandten Oberfläche eine dielektrische Schicht 3 aus Titanoxid-Keramik auf. Zwischen der Schicht 3 und der ersten Elektrode erstreckt sich der typisch 0,6 bis 2 mm breite Entladungsspalt 4 des Ozonerzeugers.

Insoweit entspricht der bisherige Aufbau den bekannten Ozonisatoren mit Titanoxid-Dielektrikum, wie sie beispielsweise von der Fa. U.S. Ozonair Corporation, 464 Cabot Road, South San Francisco, California 94080, hergestellt und verkauft werden (vgl. US-Zeitschrift OZONEWS Vol. 9, Number 9, 1980, Seite 2).

Die Schicht 3 ist erfindungsgemäss auf der dem Entladungsspalt 4 zugewandten Oberfläche mit einer Schutzschicht 5 aus Passivierungsglas versehen. Es handelt sich hierbei um eine aufgeschmolzene Glasschicht, wie sie heute zur Steigerung von Güte und Zuverlässigkeit für viele Arten von Silizium-Halbleiterbauelementen verwendet wird.

Alle wesentlichen Einzelheiten bezüglich Zusammensetzung, Aufbringung der Schutzschicht 5, Schichtdicke sind der Firmenschrift "Schott Produkt Information Nr. 4841 - Passivierungsgläser für Halbleiterbauelemente" der Firma Jenaer Glaswerk Schott & Gen., Werk Landshut, D-8300 Landshut 2, undatiert, Publikations Nr. 4841dxl/79 o.P., zu entnehmen.

In Uebereinstimmung mit dem Passivieren von Silizium-Wafern wird beim Erfindungsgegenstand das in Pulverform angelieferte Passivierungsglas in organischer Suspension (Lösung von 2 % Nitrozellulose in Essigsäure-[2-(2-butoxyäthoxy)-äthylester) durch Aufschleudern, Aufstreichen, Tauchen oder Elektrophorese aufgebracht. Nach dem Abdampfen des Suspensionsmittels (ca. 10 Minuten im Temperaturbereich 350 - 450° C), wird während ca. 5 Minuten bei ca. 700° C die Glasschicht erzeugt.

Bei der zweiten Ausführungsform der Erfindung gemäss Fig. 2 besteht das Dielektrikum aus einem mit dielektrischem Pulver gefüllten härtbaren Kunststoff, wie er beispielsweise in der deutschen Offenlegungsschrift 31 28 746 oder in der deutschen Offenlegungsschrift 34 42 121 (DE-Patentanmeldung P 34 42 121.1 der Anmelderin vom 17.11.84 oder schweizerischen Patentgesuch Nr. 5099/84-4 vom 25.10.84) beschrieben ist. Die Schicht 3' enthält eine Vielzahl von $TiO_2$-Körnern in mehr oder weniger gleichmässiger Verteilung und dazwischenliegende Bariumtitanatkörner. Beide Körnertypen sind in ein heisshärtendes vorzugsweise anhydridgehärtetes Epoxidharz mit einer relativen Dielektrizitätskonstante $\epsilon_r \approx 3,5$ eingelagert. Die Dicke der dielektrischen Schicht 3' beträgt zwischen 1 und 5 mm, vorzugsweise 2,5 bis 3 mm. Das Bariumtitanatpulver weist eine Korngrösse von weniger als 1 $\mu$m auf und besitzt eine relative Dielektrizitätskonstante $\epsilon_r \approx 2000$.

Die groben Körner bestehen aus $TiO_2$ mit Korngrössen zwischen 5 und 100 $\mu$m mit einer relativen Dielektrizitätskonstante von $\epsilon_r \approx 100$. Sie werden durch Sintern von feinkörnigem $TiO_2$ und anschliessendem Zerkleinern gewonnen.

Mit einer derart aufgebauten Schicht, die ca. 42 Vol.-% Kunstharz, ca. 20 Vol.-% Bariumtitanatpulver und ca. 38 Vol.-% grobkörniges $TiO_2$ aufweist, ergab sich eine relative Dielektrizitätskonstante der gesamten Schicht von ca. $\epsilon_r \approx 30$, wobei die Langzeit-Durchschlagfestigkeit über 2000 V/mm betrug.

Vergleichbare Werte lieferte eine Schicht 3' mit einer Mischung aus Glaskügelchen und Elektrokorund als grobkörniger Bestandteil der dielektrischen Schicht.

Die dem Entladungsspalt 4 zugewandte Oberfläche der Schicht 3' ist mit einem Keramik-Kleber auf Kiesel-Basis ($SiO_2$) überzogen. Diese Scutzschicht 5' kann durch Aufsprühen oder Tauchen aufgebracht werden und wird während ca. 50 Stunden bei ca. 100° C ausgeheizt.

Zur besseren Verbindung mit dem Grundmaterial empfiehlt sich eine Vorbehandlung mit einem Keramik-Kleber auf $Al_2O_3$-Basis.

Beide Keramik-Kleber sind beispielsweise in der Firmenschrift "Keramik-Produkte für Hoch-Temperaturen" der Fa. Kager GmbH, D-6000 Frankfurt/M. 61, undatiert, dort der Typ 989 als Grundierungs- bzw. Haftvermittlerschicht und der Typ 918 als Deckschicht, beschrieben.

Obwohl die Kunststoff-Dielektrika nach der vorgenannten Patentanmeldung aufgrund ihres speziellen Aufbaus dem Angriff der Teilentladungen sehr gut standhalten, lässt sich durch die erfindungsgemässe Beschichtung mit dem Keramik-Kleber die Resistenz noch weiter erhöhen.

## Patentansprüche

1. Ozonerzeuger mit einer ersten (1) und einer zweiten metallischen Elektrode (2) und einer Grundschicht (3;3') aus dielektrischem Material auf der der ersten Elektrode zugewandten Oberfläche der zweiten Elektrode, welche Grundschicht mit einer Deckschicht aus anorganischem, dielektrischem Material überzogen ist, und einem Entladungsspalt (4) zwischen der ersten Elektrode und besagten Deckschicht, dadurch gekennzeichnet, dass bei Grundschichten aus mit dielektrischem Pulver gefülltem Kunststoff (3') diese Schicht mit einem Hochtemperatur-Keramik-Kleber auf $SiO_2$-Basis überzogen ist.

2. Ozonerzeuger nach Anspruch 1, dadurch gekennzeichnet, dass die Schichtdicke des Hochtemperatur-Keramik-Klebers zwischen 10 und 100 $\mu$m beträgt.

3. Ozonerzeuger nach Anspruch 1 oder 2, dadurch gekennzeichnet, dass bei einer Grundschicht aus mit dielektrischem Pulver gefülltem Kunststoff zwischen dieser und der Deckschicht eine Zwischenschicht auf $Al_2O_3$-Basis als Haftvermittler vorgesehen ist.

## Patentansprüche für folgende Vertragsstaaten: CH,FR,GB,LI,NL

1. Ozonerzeuger mit einer ersten (1) und einer zweiten metallischen Elektrode (2) und einer Grundschicht (3;3') aus dielektrischem Material auf der der ersten Elektrode zugewandten Oberfläche der zweiten Elektrode, welche Grundschicht mit einer Deckschicht aus anorganischem, dielektrischem Material überzogen ist, und einem Entladungsspalt (4) zwischen der ersten Elektrode und besagten Deckschicht, dadurch gekennzeichnet, dass bei Grundschichten aus Titandioxid-Keramik die weitere Schicht aus Passivierungsglas (5), bei Grundschichten aus mit dielektrischem Pulver gefülltem Kunststoff (3') diese Schicht mit einem Hochtemperatur-Keramik-Kleber auf $SiO_2$-Basis überzogen ist.

2. Ozonerzeuger nach Anspruch 1, dadurch gekennzeichnet, dass die Schichtdicke der Glaspassivierung zwischen 5 und 500 $\mu$m, diejenige des Hochtemperatur-Keramik-Klebers zwischen 10 und 100 $\mu$m beträgt.

3. Ozonerzeuger nach Anspruch 1 oder 2, dadurch gekennzeichnet, dass bei einer Grundschicht aus mit dielektrischem Pulver gefülltem

## Claims

1. Ozone generator with a first (1) and a second metallic electrode (2) and a base layer (3; 3') of a dielectric material on that surface of the second electrode which faces the first electrode, said base layer being coated with a covering layer made of inorganic dielectric material, and a discharge gap (4) between the first electrode and said covering layer, characterised in that, in the case of base layers of plastic (3') filled with dielectric powder, this layer is coated with a high-temperature ceramic adhesive based on $SiO_2$.

2. Ozone generator according to Claim 1, characterised in that the thickness of the high-temperature ceramic adhesive is between 10 and 100 $\mu$m.

3. Ozone generator according to Claim 1 or 2, characterised in that in the case of a base layer made of plastic filled with a dielectric powder, an interlayer based on $Al_2O_3$ is provided as an adhesion-promoter between this base layer and the covering layer.

## Revendications

1. Générateur d'ozone, comprenant une première électrode métallique (1) et une deuxième (2) et une couche de fond (3; 3') en matière diélectrique sur la surface de la deuxième électrode tournée vers la première électrode, laquelle couche de fond est recouverte d'une couche de couverture faite d'une matière diélectrique inorganique, outre un espace de décharge (4) entre la première électrode et la couche de couverture précitée, caractérisé en ce que pour des couches de fond faites d'une matière plastique chargée d'une poudre diélectrique (3'), cette couche est recouverte d'une colle à la céramique à base de $SiO_2$ pour haute température.

2. Générateur d'ozone suivant la revendication 1, caractérisé en ce que l'épaisseur de couche de colle à la céramique pour haute température est de 10 à 100 $\mu$m.

3. Générateur d'ozone suivant la revendication 1 ou 2, caractérisé en ce que pour une couche de fond faite d'une matière plastique chargée d'une poudre diélectrique, une couche inter-

médiaire à base d'$Al_2O_3$ est prévue comme intermédiaire d'adhérence entre la couche de fond et la couche de couverture.

EP 0 202 501 B1

FIG.1

FIG.2

6